# EUROPEAN PATENT APPLICATION

(11) **EP 3 979 156 A1**
(43) Date of publication of application: **06.04.2022**
(21) Application number: 20813794.3
(22) Date of filing: 02.04.2020
(51) Int. Cl.: G06Q 10/04, G06T 7/00, G06Q 50/08

(54) **WORK ANALYSIS SYSTEM, WORK ANALYSIS DEVICE, AND WORK ANALYSIS PROGRAM**

(30) Priority: 24.05.2019 JP 2019098114
(71) Applicant: KONICA MINOLTA, INC., Tokyo 100-7015 (JP)
(72) Inventor: IMAI, Makoto, Tokyo 100-7015 (JP); SHOBU, Takahiko, Tokyo 100-7015 (JP); ISHIKAWA, Ryouta, Tokyo 100-7015 (JP); KOJIMA, Hidesato, Tokyo 104-8370 (JP)
(74) Representative: Gille Hrabal Partnerschaftsgesellschaft mbB Patentanwälte
(86) International application number: PCT/JP2020/015195
(87) International publication number: WO 2020/241043

(57) **Abstract**

Even in a site where surrounding situations change day by day, a work history is made possible to record.

A work analyzing system 1 includes an object recognizing unit 222 that recognizes an object including a work machine 80 or a person 85 on a basis of measurement data obtained by measuring a work area 90 by a measurement unit 10 and determines position information on the recognized object and a feature amount with regard to a shape of the object, and a determination unit 223 that determines a work performed in a work area 90 on a basis of a position of the object recognized by the object recognizing unit 222, a positional relationship relative to other objects, and a feature amount.

## Description

### TECHNICAL FIELD

The present invention relates to a work analyzing system, a work analyzing apparatus, and a work analyzing program.

### BACKGROUND ART

In production sites and so on, a cycle of analyzing works in processes for increasing productivity and improving this, is repeated, thereby trying to improve the productivity.

In order to perform work analysis and work improvement, it is necessary to grasp works in processes. In Patent Literature 1 (JP 2019-16226A), disclosed is a work data management system with an aim to grasp work contents in work sites easily. This work management system arranges two network cameras so as to photograph a work site and specifies a position of each of a head of a worker and a hand of the worker from picture images obtained from these net cameras. Then, the obtained process data (large process data) of the worker is subdivided in time series into detailed processes on a basis of a position of each of the head and the hand specified from the obtained picture image and is displayed on a result display unit as a Gantt chart.

### SUMMARY OF INVENTION

### Technical Problem

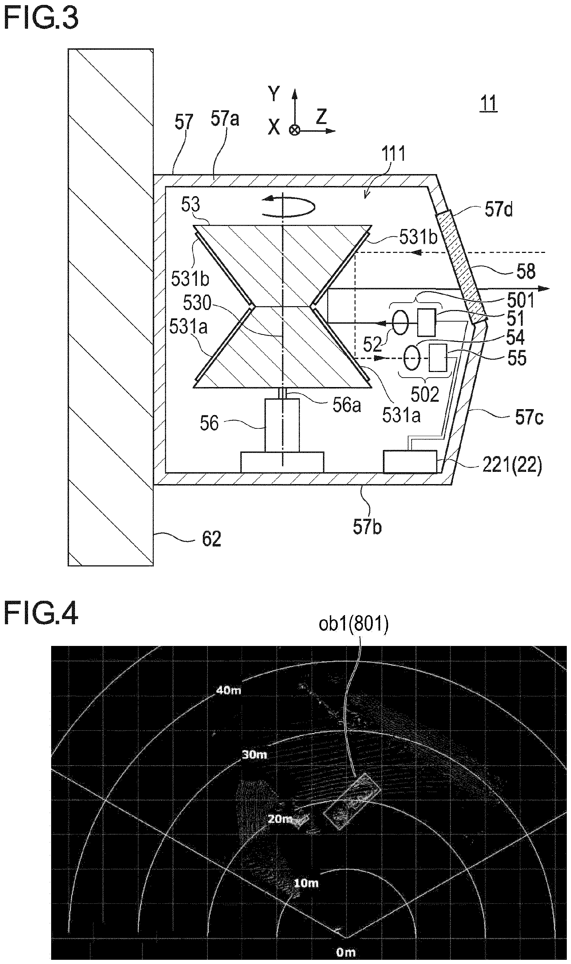

However, in Patent Literature 1, what kind of work has been performed is determined on a basis of a positional relationship between the position of each of the head and hand of a worker and the position of a work machine (FIG. 3 etc.). Therefore, this technology is applied only to a manufacture site that uses fixed work machines in indoor manufacture sites. For example, like outdoor building sites or construction sites, in a site where surrounding environments change day by day, or the positions of work machines or workplaces change, it is difficult to apply the technology of Patent Literature 1.

The present invention has been achieved in view of the above-described circumstances, and an object is to provide a work analyzing system, a work analyzing apparatus, and a work analyzing program that can record a work history even in a site where surrounding situations change day by day.

### Solution to Problem

The above-described object of the present invention is attained by the following units.
(1) A work analyzing system, includes:
   a measurement unit that measures an inside of a work area and acquires measurement data of time series;
   an object recognizing unit that recognizes an object including a work machine or a person on a basis of the acquired measurement data and determines position information on the recognized object and a feature amount with regard to a shape of the object; and
   a determination unit that determines a work having been performed in the work area on a basis of a position of the object recognized by the object recognizing unit, a positional relationship relative to other objects, and the feature amount.
(2) The work analyzing system described in the above-described (1), in a memory unit, a work plan that is performed in the work area and includes one or more the work, and a work determining criterion to determine whether or not the work has been executed, are memorized, and the determination unit performs determination of the work by using the work plan and the work determining criterion.
(3) The work analyzing system described in the above-described (1), in a memory unit, a work plan that is performed in the work area and includes one or more the work is memorized,
   the determination unit performs determination of the work by using the work plan and a learned model with regard to a work determining criterion, and
   the learned model is one having performed supervised learning in which an input of a position of the object recognized by the object recognizing unit, a positional relationship relative to other objects, and information on the feature amount and an output of a correct answer label of classification of the work, are made as a set.
(4) The work analyzing system described in any one of the above-described (1) to the above-described (3), the measurement unit includes a LiDAR and acquires, as the measurement data, distance measurement point group data obtained by measuring a distance in the work area by the LiDAR.
(5) The work analyzing system described in the above-described (4), the object recognizing unit recognizes the object by using the distance measurement point group data and determines position information on the recognized object.
(6) The work analyzing system described in the above-described (4) or the above-described (5), the object recognizing unit performs recognition of the feature amount by using the distance measurement point group data.
(7) The work analyzing system described in any one of the above-described (1) to the above-described (4), the measurement unit includes a camera and acquires, as the measurement data, picture image data obtained by photographing an inside of the work area.
(8) The work analyzing system described in the above-described (7), the object recognizing unit recognizes the object by performing image analysis for the picture image data and performs determination of position information on the recognized object.
(9) The work analyzing system described in the above-described (7) or the above-described (8), the object recognizing unit performs recognition of the feature amount by performing image analysis for the picture image data.
(10) The work analyzing system described in any one of the above-described (1) to the above-described (4) and the above-described (7), further comprising:
   an acquisition unit that acquires position information on a position information device held by the object,
   wherein the object recognizing unit performs recognition of the object and determination of position information on the object on a basis of position information acquired from the position information device.
(11) The work analyzing system described in the above-described (10), the work machine includes a main body and one or more operating portions in which each of the operating portions is attached to the main body and a relative position of each of the operating portions relative to the main body changes,
   on a basis of position information acquired by the acquisition unit from the position information device attached to each of the main body and the operating portions,
   the object recognizing unit recognizes the feature amount of the work machine, and
   the determination unit performs determination of the work by using the recognized feature amount.
(12) The work analyzing system described in any one of the above-described (1) to the above-described (11), the determination unit determines the work by using a moving speed of the object detected on a basis of a change of time series of a position of the object.
(13) The work analyzing system described in the above-described (12), the determination unit determines the work by using a state of moving and stop of the object determined on a basis of the moving speed of the object.
(14) The work analyzing system described in the above-described (12), further comprising:
   an acquisition unit that acquires output data from an acceleration sensor attached to the work machine,
   wherein the determination unit determines the work by using a state of moving and stop of the work machine determined on a basis of output data from the acceleration sensor.
(15) The work analyzing system described in any one of the above-described (1) to the above-described (14), further comprising:
   an output creating unit that, by using a determination result by the determination unit, creates work analysis information with regard to at least any one of a Gantt chart, a work ratio of each object, and a flow line or a heat map in an inside of the work area of each object.
(16) A work analyzing apparatus, comprising:
   an acquisition unit that acquires measurement data of time series from a measurement unit that measures an inside of a work area;
   an object recognizing unit that recognizes an object including a work machine or a person on a basis of the acquired measurement data and determines position information on the recognized object and a feature amount with regard to a shape of the object; and
   a determination unit that determines a work having been performed in the work area on a basis of a position of the object recognized by the object recognizing unit, a positional relationship relative to other objects, and the feature amount.
(17) A work analyzing program that is executed in a computer to control a work analyzing system including a measurement unit to measure an inside of a work area, the work analyzing program that makes the computer execute processing, comprising:
   a step (a) of measuring an inside of a work area by the measurement unit and acquiring measurement data of time series;
   a step (b) of recognizing an object including a work machine or a person on a basis of the acquired measurement data and determining position information on the recognized object and a feature amount with regard to a shape of the object; and
   a step (c) of determining a work having been performed in the work area on a basis of a position of the object recognized in the step (b), a positional relationship relative to other objects, and the feature amount.
(18) The work analyzing program described in the above-described (17), the processing further comprises:
   a step (d) of acquiring a work plan including one or more the work performed in the work area and a work determining criterion to determine whether or not the work has been executed, and
   in the step (c), determination of the work is performed by using the work plan and the work determining criterion.

### Advantageous Effects of Invention

A work analyzing system according to the present invention includes an object recognizing unit that recognizes an object including a work machine or a person on a basis of measurement data obtained by measuring a work area by a measurement unit and determines position information on the recognized object and a feature amount with regard to a shape of the object, and a determination unit that determines a work performed in a work area on a basis of a position of the object recognized by the object recognizing unit, a positional relationship relative to other objects, and the feature amount. With this, it becomes possible to record a work history even in a work site in which surrounding situations changes day by day.

### Brief Description of Drawings

FIG. 1 is a block diagram showing a main configuration of a work analyzing system according to the first embodiment.
FIG. 2 is a schematic diagram showing one example of a work area where the work analyzing system is used.
FIG. 3 is a cross sectional view showing a configuration of a LiDAR.
FIG. 4 is a display image (top view) created from the measurement data of the LiDAR.
FIG. 5 is a main flowchart showing work analyzing processing that the work analyzing system executes.
FIG. 6 is an example of a detected object list.
FIG. 7 is a subroutine flowchart showing processing in Step S20 in FIG. 5.
FIG. 8A is an example of a work plan.
FIG. 8B is an example of a work plan.
FIG. 9 is a subroutine flowchart showing processing in Step S32 in FIG. 7.
FIG. 10 is an example of a work determining criterion.
FIG. 11A is an example of a work determination result.
FIG. 11B is an example of a work determination result.
FIG. 12 is a subroutine flowchart showing processing in Step S34 in a first example in FIG. 7.
FIG. 13 is a subroutine flowchart showing processing in Step S34 in a second example in FIG. 7.
FIGS. 14A to 14C is drawing showing a situation of a work content "moving" in Step S506.
FIGS. 15A to 15D is drawing showing a situation of a work content "loading" in Steps S505 and S605.
FIGS. 16A to 16D is drawing showing a situation of work contents "conveying-out" and "moving 2" in Steps S507 and S607.
FIG. 17 is a subroutine flowchart showing processing in Step S34 in a third example in FIG. 7.
FIG. 18 is an example of a work determining criterion.
FIGS. 19A and 19B is a schematic diagram showing one example of a work area 90 in a spray process.
FIG. 20 is a block diagram showing a main configuration of a work analyzing system in a second embodiment.
FIG. 21 is a block diagram showing a main configuration of a work analyzing system in a third embodiment.
FIG. 22 is an output example (a Gantt chart).
FIGS. 23A and 23B is an output example (a flow line).

### Description of Embodiments

Hereinafter, with reference to attached drawings, embodiments of the present invention will be described. In this connection, in the description for the drawings, the same configurational element is provided with the same reference symbol, and the overlapping description is omitted. Moreover, dimensional ratios in the drawings are exaggerated on account of description and may be different from the actual ratios.

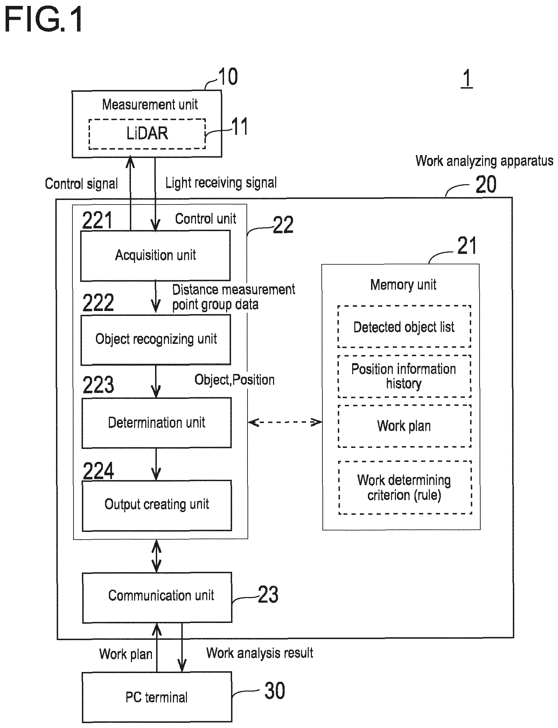

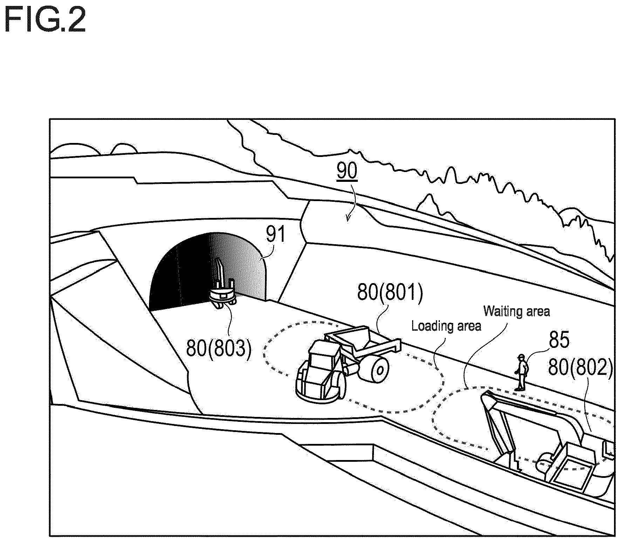

FIG. 1 is a block diagram showing a main configuration of a work analyzing system 1. FIG. 2 is an illustration showing an example of a work area 90 where the work analyzing system 1 is used. FIG. 3 is a cross sectional view showing a configuration of a LiDAR 11.

As shown in FIG. 1, the work analyzing system 1 includes a measurement unit 10 and a work analyzing apparatus 20, and these are connected with a PC terminal 30.

The work analyzing apparatus 20 includes a memory unit 21, a control unit 22, and a communication unit 23. Moreover, the work analyzing apparatus 20 is connected so as to communicate with the measurement unit 10 and PC terminal 30. The work analyzing apparatus 20 may be constituted with the measurement unit 10 in one body and disposed in the same casing or may be constituted in respective separate bodies. The PC terminal 30 is a personal computer that is connected locally or via a network to the work analyzing system 1. The work analyzing system 1 acquires a work plan input from the PC terminal 30 and outputs an analysis result analyzed by using this to the PC terminal 30.

The work analyzing system 1 appoints a work area 90, such as a construction site as shown in FIG. 2, as a target, and supports recording of work histories and management in the work area 90. An applicable range of the work analyzing system 1 is not limited to the construction site as shown in FIG. 2 but may be applied to a construction site in an indoor or outdoor, a manufacturing process in an indoor, or a work area of a logistics warehouse. Moreover, the work area is not limited to one compartmentalized area but may be, for example, multiple separated work areas.

In the work area 90, multiple work machines 80 (801 to 803) and workers 85 move and work. In FIG. 2, as an example of the work area 90, a construction site excavating a tunnel in a mountain is illustrated. In the work area 90, there is a pit mouth 91 (tunnel entrance).

Hereinafter, in the case of referring generically the work machines 801 to 803, they are referred simply to a work machine 80 (the below-mentioned workers 85 are also referred in the similar manner). The work machine 80 is a machine, in particular, a vehicle that operates mechanically with the power of electricity or engine, used in the work area 90. In the work machine 80, for example, an arti-damp, a wheel loader, a backhoe, a power shovel, a breaker, a mixer truck, and a spray machine for spraying concrete, and the like are included. In the example in FIG. 2, the work machines 801, 802, and 803 are work machines of the type of an arti-damp, a backhoe, and a wheel loader, respectively. Moreover, if the work area 90 is a manufacturing site, the work machine 80 includes an installation crane, an assembling machine, a vehicle such as a forklift for conveyance, and a self-propelled crane. The data of respective sizes and forms of these work machines 80 are registered beforehand in the memory unit 21.

The measurement unit 10 appoints the work area 90 as a target and detects the position information on the work machines 80 and the like that operate in there. In an example shown in FIG. 1 and FIG. 3, the measurement unit 10 includes a LiDAR 11 (LiDAR: Light Detection and Ranging). The LiDAR 11 uses a part or all of the work area 90 as shown in FIG. 2 as a measurement space and performs scanning for the inside of the measurement space, thereby performing detection of a target object over the entire area in the measurement space. The LiDAR 11 generates distance measurement point group data (also referred to "distance image", "3D map", or "distance map") that has distance information up to a target object, for each pixel. Three-dimensional position information on a target object is acquired on the basis of the distance measurement point group data. In FIG. 2, the entire region of the work area 90 is set as a measurement space by using one LiDAR 11. However, by arranging multiple LiDARs 11 in such a way that their measurement spaces overlaps partially with each other, it becomes possible to measure a wider area. In this connection, the multiple sets of the distance measurement point group data obtained by the multiple LiDARs 11 respectively may be integrated into one coordinate system by performing coordinate conversion. Moreover, in order to avoid that processing becomes complicated, without performing the integrating of the coordinate systems, in the case of having recognized an object (moving body) in the measurement space, it may be permissible to perform only associating the object. Moreover, the LiDAR 11 acquires distance measurement point group data of a time series of a given period continuously with a period (fps) of several frames to several tens of frames per one second.

In this connection, the measurement unit 10 may use a measuring instrument of other type in place of the LiDAR 11 or together with the LiDAR 11. For example, distance measurement point group data may be generated by using a stereo camera as mentioned later. Alternatively, as mentioned later, as the measuring instrument of other kinds, with a wireless terminal carried by a worker (target object), information on the radio wave intensity etc. of Wi-fi transmitted from three or more locations or radio signals from a beacon is acquired, and then, a position in the work area 90 may be detected from this information on the radio wave intensity and the like.

### (LiDAR 11)

Hereinafter, a configuration of the LiDAR 11 is described with reference to FIG. 3. FIG. 3 is a cross sectional view showing a schematic configuration of the LiDAR 11. The LiDAR 11 includes a light projecting and receiving unit 111. The light projecting and receiving unit 111 includes a semiconductor laser 51, a collimate lens 52, a mirror unit 53, a lens 54, a photodiode 55, and a motor 56, and a casing 57 that stores each configuration member of these. In the casing 57, an acquisition unit 221 of the control unit 22 is disposed. The light projecting and receiving unit 111 outputs a light reception signal of each pixel obtained by scanning an inside of a measurement space of the LiDAR 11 with a laser spot beam. The acquisition unit 221 generates distance measurement point group data on the basis of this light reception signal.

The semiconductor laser 51 emits a pulse-shaped laser light flux. The collimate lens 52 converts a divergent light flux coming from the semiconductor laser 51 into a parallel light flux. The mirror unit 53 projects, in a scanning mode, a laser light flux having been made a parallel light flux by the collimate lens 52 toward a measurement area by a rotating mirror surface and reflects a reflected light flux coming from the target object. The lens 54 light-collects the reflected light flux reflected on the mirror unit 53 and coming from the target object. The photo diode 55 receives light collected by the lens 54 and includes multiple pixels arranged in the Y direction. The motor 56 drives and rotates the mirror unit 53.

The acquisition unit 221 acquires distance information (distance value) on the basis of a time interval (time difference) between a light emitting timing of the semiconductor laser 51 and a light receiving timing of the photo diode 55. The acquisition unit 221 includes a CPU and a memory and acquires distance measurement point group data by executing various kinds of processing by executing programs memorized in a memory. However, the acquisition unit 221 may include a dedicated hardware circuit for generating distance measurement point group data. Moreover, the acquisition unit 221 may be incorporated in the inside of the casing of a main body of the work analyzing system 1 and may be integrated in the sense of hardware.

In the present embodiment, a light emitting unit 501 is constituted by the semiconductor laser 51 and the collimate lens 52, and the light receiving unit 502 is constituted by the lens 54 and the photodiode 55. It is preferable that an optical axis of each of the light emitting unit 501 and the light receiving unit 502 is orthogonal to a rotation axis 530 of the mirror unit 53.

The box-shaped casing 57 installed by being fixed to a pole 62 located on a hill so as to be able to recognize the work area 90, includes an upper wall 57a, a lower wall 57b opposite to this upper wall 57a, and a side wall 57c that connects the upper wall 57a and the lower wall 57b. On a part of the side wall 57c, an opening 57d is formed, and to the opening 57d, a transparent plate 58 is attached.

The mirror unit 53 has a form in which two quadrangular pyramids are joined with each other in opposite directions and integrated into one body. That is, the mirror unit 53 includes four pairs (however, not limited to four pairs) of mirror surfaces 531a and 531b in which the mirror surfaces 531a and 531b are made one pair and are inclined in respective directions so as to face each other. It is preferable that the mirror surfaces 531a and 531b are formed by vapor-depositing a reflective film on the surface of a resin material (for example, PC (polycarbonate)) shaped in the form of the mirror unit.

The mirror unit 53 is connected to a shaft 56a of the motor 56 fixed to the casing 57 and is configured to be driven to rotate. In the present embodiment, for example, in a state of being installed on the pole 62, an axis line (rotation axis line) of the shaft 56a is extended to exist in the Y direction being a vertical direction, and a XZ flat surface formed by the X direction and the Z direction each orthogonal to the Y direction becomes a horizontal surface. However, the axis line of the shaft 56a may be inclined relative to the vertical direction.

Next, the target object detection principle of the LiDAR 11 will be described. In FIG. 3, a divergent light flux intermittently emitted in a pulse form from the semiconductor laser 51 is converted into a parallel light flux by the collimate lens 52, and the parallel light flux enters the first mirror surface 531a of the rotating mirror unit 53. Thereafter, the parallel light flux is reflected on the first mirror surface 531a and further reflected on the second mirror surface 531b. Thereafter, the parallel light flux passes through the transparent plate 58 and the parallel light flux is projected in a scanning mode as a laser spotlight having, for example, a longwise rectangular cross section, toward an external measurement space. In this connection, a direction in which the laser spotlight is emitted and a direction in which the emitted laser spotlight returns as a reflected light flux reflected on a target object, overlap each other, and these two overlapped directions are called light projecting/receiving direction (note that, in FIG. 3, in order to make it easy to understand, the emitted light flux and the reflected light flux are shown by being moved away from each other). A laser spotlight that advances in the same light projecting/receiving direction is detected by the same pixel.

Here, in a combination of paired mirrors (for example, the first mirror surface 531a and the second mirror surface 531b) of the mirror unit 53, the respective intersecting angles of the four pairs are different from each other. A laser beam is reflected on the rotating first mirror surface 531a and second mirror surface 531b sequentially. First, a laser beam reflected on the first mirror surface 531a and the second mirror surface 531b of the first pair is made to scan from the left to the right in the horizontal direction (also referred to as a "main scanning direction") on the uppermost region of a measurement space correspondingly to the rotation of the mirror unit 53. Next, a laser beam reflected on the first mirror surface 531a and the second mirror surface 531b of the second pair is made to scan from the left to the right in the horizontal direction on the second region from the top of the measurement space correspondingly to the rotation of the mirror unit 53. Next, a laser beam reflected on the first mirror surface 531a and the second mirror surface 531b of the third pair is made to scan from the left to the right in the horizontal direction on the third region from the top of the measurement space correspondingly to the rotation of the mirror unit 53. Next, a laser beam reflected on the first mirror surface 531a and the second mirror surface 531b of the fourth pair is made to scan from the left to the right in the horizontal direction on the lowermost region of the measurement space correspondingly to the rotation of the mirror unit 53. With this, one scan for the entire measurement space measurable by the LiDAR 11 has been completed. By combining images acquired by scanning these four regions, one frame is obtained. Then, after the mirror unit 53 has rotated one time, the scanning returns again to the first mirror surface 531a and the second mirror surface 531b of the first pair. Thereafter, the scanning is repeated from the uppermost region to the lowermost region of the measurement space (this scanning direction from the uppermost region to the lowermost region is also referred to as a "sub-scanning direction"), thereby obtaining the next frame.

In FIG. 3, among a light flux having been projected in a scanning mode, some of laser beams reflected by hitting a target object pass through the transparent plate 58 again, enter the second mirror surface 531b of the mirror unit 53 in the casing 57, are reflected there, are further reflected on the first mirror surface 531a, are light-collected by the lens 54, and then, are detected by respective pixels on the light receiving surface of the photodiode 55. Furthermore, the acquisition unit 221 acquires distance information correspondingly to a time difference between a light emitting timing of the semiconductor laser 51 and a light receiving timing of the photodiode 55. With this manner, the detecting of a target object is performed on the entire region of the measurement space, whereby a frame as distance measurement point group data having distance information for each pixel can be obtained. Moreover, according to an instruction of a user, the obtained distance measurement point group data may be memorized as background image data in a memory in the acquisition unit 221, or the memory unit 21.

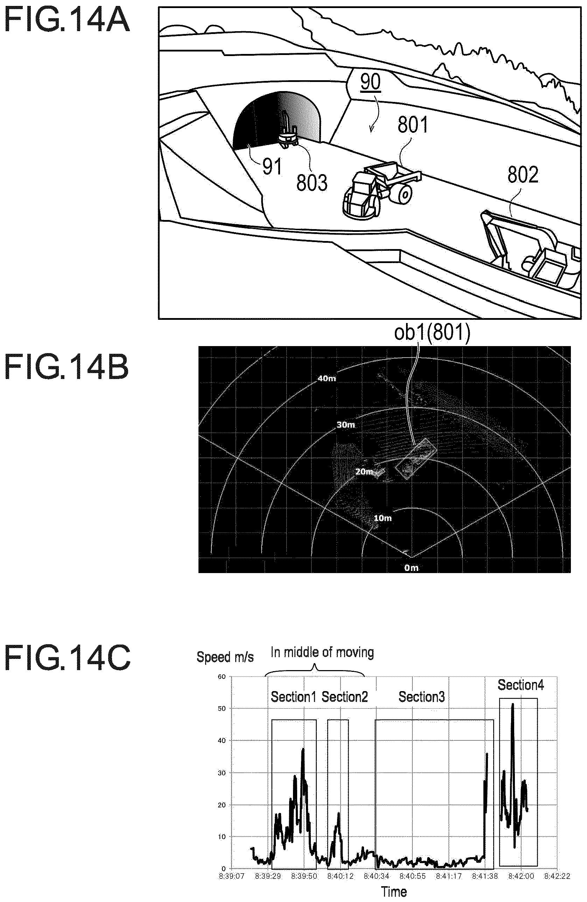

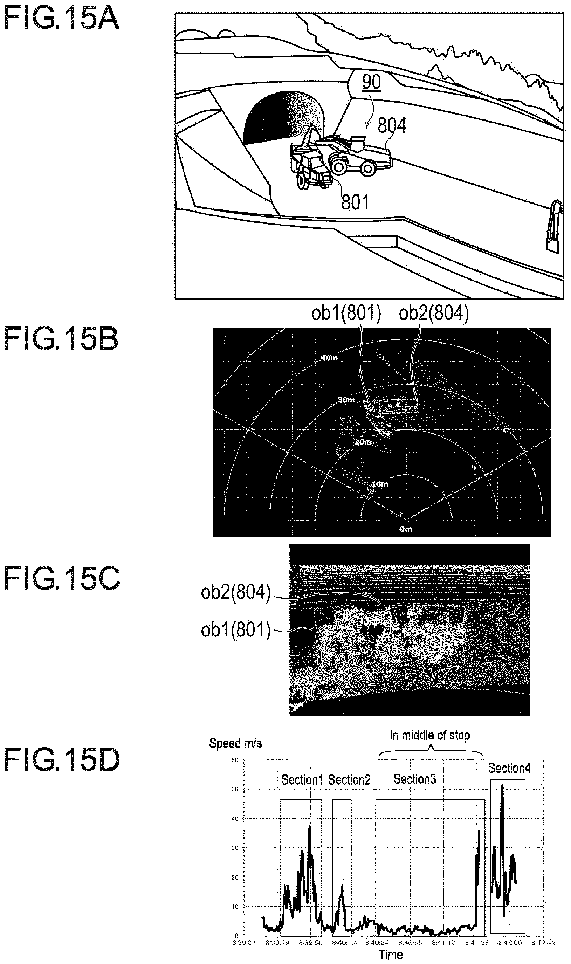

FIG. 4 shows a display image created from the measurement data of the LiDAR. It is the display image of a top view created from distance measurement point group data obtained by measuring the work area 90 shown in FIG. 2. The distance (0 m, 10 m, etc.) indicated in the same drawing (Fig. 4) corresponds to a distance from the position of the LiDAR 11. Moreover, an object ob1 indicated in the same drawing (Fig. 4) corresponds to the work machine 801 shown in FIG. 2. In this connection, in the same drawing (Fig. 4), among the work area 90, only a periphery of a loading area is plotted, and a description about a periphery of a waiting area is omitted (hereinafter, omission is applied in the same manner in FIG. 14B, FIG. 15B, etc.).

### (Work analyzing system 1)

With reference again to FIG. 1, the work analyzing system 1 will be described. The work analyzing system 1 is, for example, a computer and includes a CPU (Central Processing Unit), a memory (semiconductor memory, magnetic recording media (hard disk etc.)), an input/output unit (a display, a keyboard, etc.), and the like.

As mentioned above, the work analyzing system 1 includes the memory unit 21, the control unit 22, and the communication unit 23. The memory unit 21 is constituted by a memory. The control unit 22 is mainly constituted by a memory and a CPU. In this connection, a part of a functional configuration (acquisition unit 221) of the control unit 22 may be realized by hardware disposed in the casing 57 of the LiDAR 11, and the other functional configuration may be disposed in another casing. In that case, the other functional configuration may be disposed near the work area 90 or may be disposed at a remote place and may be connected to other apparatuses (measurement unit 10 etc.) through a network.

The communication unit 23 is an interface for communicating with external apparatuses, such as a PC terminal 30. For the communication, a network interface according to a standard, such as Ethernet (registered trademark), SATA, PCI Express, USB, IEEE 1394, and the like, may be used. Moreover, for the communication, wireless-communication interfaces, such as Bluetooth (registered trademark) and IEEE 802. 11, 4G, and the like, may be used.

The control unit 22 functions as an object recognizing unit 222, a determination unit 223, and an output creating unit 224 besides the above-mentioned acquisition unit 221. Here, before describing the function of the control unit 22, each data memorized in the memory unit 21 is described.

### (Memory unit 21)

In the memory unit 21, a detected object list (also referred to as a detected thing list), position information history data, a work determining criterion, a work plan, and the like are memorized.

In the "detected object list", a detection ID for inner management is provided for an object (work machine 80, worker 85, etc.) recognized by recognition processing (mentioned later) executed by the control unit 22 (object recognizing unit 222), and on the basis of the detection ID, tracing of an object is performed. Moreover, in the detected object list, at each time for each detection ID, a position, the kind of an object (the kind of a work machine), and a work specified (classified) by later-mentioned processing, are described.

The "position information history data" is history data that shows transition of the position of an object (work machine 80, worker 85, etc.) recognized continuously during predetermined time.

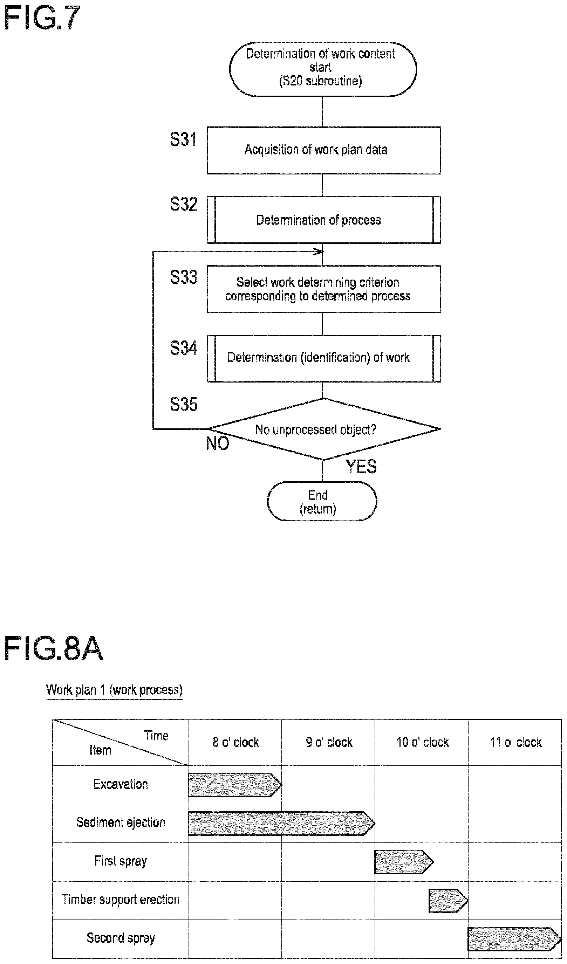

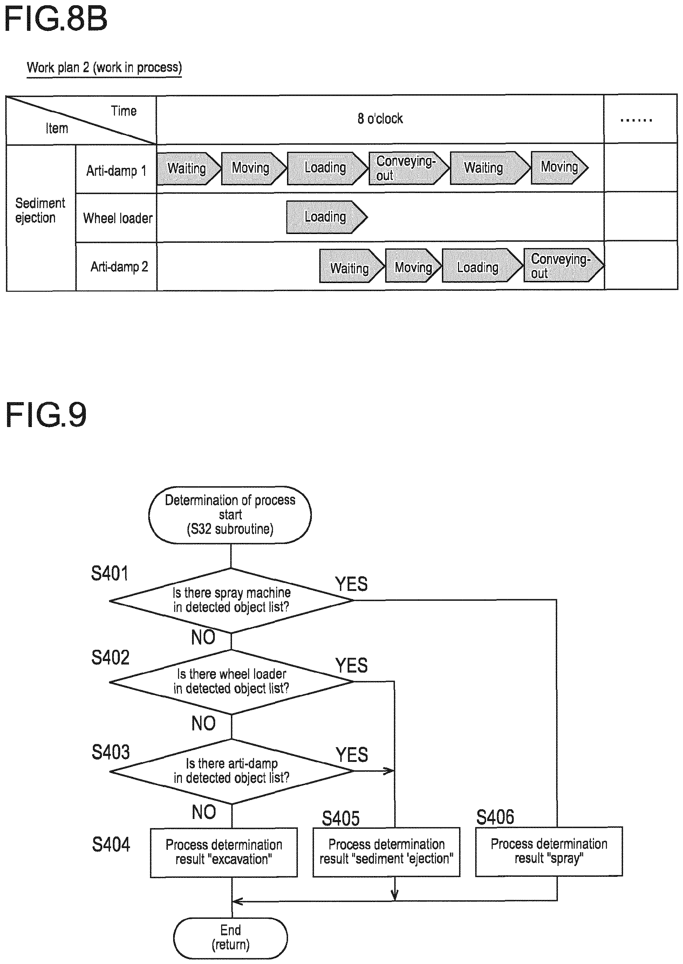

The "work plan" is a plan that describes a work process performed in the work area 90 on the day when the work history is recorded. For example, the work plan is one that has been input through the PC terminal 30 on a daily basis. An example of the work plan is mentioned later (FIGS. 8A,8B etc.). The determination unit 223 of the control unit 22 determines a work process performed in the work area 90, referring to this work plan.

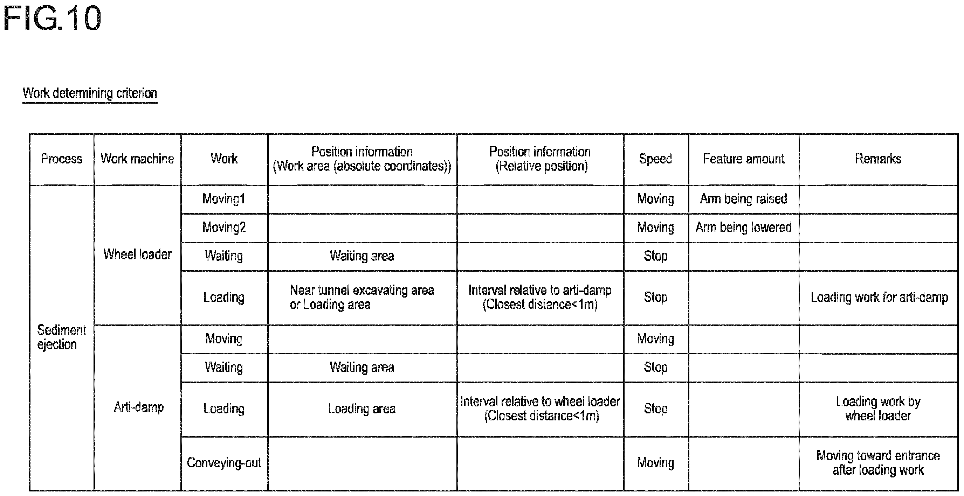

The "work determining criterion" is a determination criterion of a rule base set by a user beforehand. An example of the work determining criterion is mentioned later (FIG. 10 etc.). The determination unit 223 of the control unit 22 can perform determination (identification, classification) for a work by using this work determining criterion. By using the work determining criterion, it becomes possible to customize it to a condition that an administrator (user of a system) needs for analysis, or to adjust accuracy.

### (Control unit 22)

Next, the function of each of the acquisition unit 221, the object recognizing unit 222, the determination unit 223, and the output creating unit 224 of the control unit 22 is described.

### (Acquisition unit 221)

The function of the acquisition unit 221 is as having mentioned in the above. At the time of measurement, the acquisition unit 221 projects transmission waves (laser beam) toward multiple projection directions over a measurement space of the work area 90 by the light projecting and receiving unit 111 of the LiDAR 11 and acquires reception signals corresponding to the reflected waves of the transmission waves from an object (target object) in the measurement space. Then, the acquisition unit 221 acquires distance information of each of multiple projection directions correspondingly to receiving timings (interval between transmission and reception) of these reception signals. Then, distance measurement point group data are created on the basis of this distance information.

### (Object recognizing unit 222)

The object recognizing unit 222 recognizes an object in the work area 90. In the present embodiment, for example, a background subtraction method is adopted. In this background subtraction method, background image (also referred to as reference image) data having been created and memorized beforehand are used. In concrete terms, as pre-preparation (preprocessing) of measurement, in accordance with an instruction of a user, in a state where neither work machine 80 other than an installation type machine nor moving object such as worker 85 exists, a laser spotlight from the LiDAR 11 is made to scan. With this, on a basis of reflected light flux obtained from background target objects (still thing), a background image is obtained. At the time of actual measurement, in the case where, as an object being a target of a behavioral analysis, for example, a work machine 80 appears in front of the background target object in the work area 90, reflected light flux from the work machine 80 newly arises.

The object recognizing unit 222 has a function to recognize a moving body. When the object recognizing unit 222 compares the background image data held in the memory with the distance measurement point group data at a current time, in the case where a difference arises, it is possible to recognize that a certain moving body (object in a foreground) such as the work machine 80 appears in the work area 90. For example, by comparing the background data with the distance measurement point group data (distance image data) at a current time by using the background subtraction method, foreground data is extracted. Successively, the pixels (pixel group) of the extracted foreground data are divided into clusters, for example, according to the distance value of a pixel. Then, the size of each cluster is calculated. For example, a vertical direction size, a horizontal direction size, a total area, etc. are calculated out. In this connection, a "size" referred in here is an actual size. Accordingly, unlike a size on appearance (an angle of view, i.e., spread of pixels), a lump of a pixel group is determined according to a distance up to a target object. For example, the object recognizing unit 222 determines whether or not the calculated size is a predetermined size threshold to specify a moving body of an analytical target of an extraction target or less. The size threshold can be set arbitrarily. For example, it can be set on the basis of the size of the moving body assumed in the work area 90. In the case of analyzing movement (trajectory) by tracing the worker 85 or the work machine 80, it may be permissible that the minimum value of the worker 85 or the work machine 80 is set to a size threshold in the case of clustering. With this, garbage, such as fallen leaves and a plastic bag, or small animals can be excluded from a detection target.

Moreover, the object recognizing unit 222 recognizes the kind of a recognized object and recognizes a feature amount with regard to the shape of an object. In concrete terms, as recognition of the kind of an object, feature data with regard to a size and a shape of work machines (an arti-damp, a wheel loader, a spray machine, a shovel car, and the like) having a possibility to work in the work area 90, are memorized beforehand, and then, the kind of the work machine 80 is recognized correspondingly to a matching degree with this feature data. Moreover, with regard to a specific work machine 80 constituted by a main body and an operating portion, recognition of a feature amount is also performed. For example, a wheel loader or a shovel car includes a vehicle main body with a driver's seat, an arm as an operating portion in which a relative position with this vehicle main body changes, and a bucket. As the feature amount, on the basis of the external shape or the size of the entire object of the work machine 80, the recognition unit recognizes a feature amount with regard to a shape with which it is possible to determine whether it is in a state (1) where this arm has been being raised upward or extended forward, or in a state (2) where this arm has been being lowered downward or shrunk inward. The feature amount may be shape data or may be information that shows, for example, a state where the arm has been rising up. A positional relationship between an operating portion such as an arm and a main body with regard to a specific work machine 80 and a correspondence relationship between the positional relationship and a feature amount are memorized beforehand in the memory unit 21. Moreover, in the case where the kind of an object is a person (worker), further, on the basis a feature amount of a position of a recognized arm and an entire shape including a hand-pushed cart, it may be permissible to configure such that the object recognizing unit 222 recognizes whether or not a worker conveys a thing.

In this connection, with regard to the recognition of the kind of an object and a feature amount, the recognition may be made by using a learned model. By using a large number of learning-sample data provided with a correct answer label (the kind of a work machine or the kind of a work machine with the kind and feature amount of a work machine) with regard to an object recognized from distance measurement point group data obtained by the LiDAR 11, this can be machine-learned by supervised learning.

Furthermore, in the above-mentioned description, as "work determining criterion", an example of using a determination criterion of a rule base set by a user beforehand, has been described. However, without being limited to this, as the work determining criterion, a learned model according to machine learning may be used. In this learned model, an input is information on the position of an object recognized by the object recognizing unit 222, a positional relationship relative to other objects, and a feature amount. Then, the learned model is one having supervised learned by setting an output to a correct answer level of work classification. The learning machine with regard to these machine learning can be performed by using a stand-alone high performance computer employing a processor of a CPU and a GPU (Graphics Processing Unit) or a cloud computer. By using such a learned model, since a user can omit an input for a work determining criterion of a rule base, management becomes easy.

### (Determination unit 223)

The determination unit 223 determines (classifies) a work performed in the work area 90 from the position of an object recognized by the object recognizing unit 222, a positional relationship relative to other objects, and a feature amount. Here, as a positional relationship (relative positional relationship) relative to other objects, a distance between the respective center positions of multiple objects may be used, or a distance between the respective outlines of objects, i.e., a "gap", may be used. The calculation of this positional relationship relative to other objects may be calculated from the center position of a bounding box surrounding a recognized object or this positional relationship may be calculated from the closest distance between apexes, or sides (or faces) that constitute two bounding boxes. This bounding box is, for example, one rectangular parallelepiped that becomes a minimum area (volume) to surround an object. The positions of apexes, and sides (faces) of a bounding box can be obtained on the basis of coordinates (center position), sizes (width, height, depth), and a rotation angle θ (rotation angle (orientation of an object) on a top view) of each bounding box.

Moreover, the determination unit 223 performs further the determination of moving and stop from the calculated moving speed of an object. Moreover, for the determination of this work, the above-mentioned work plan and work determining criterion may be used. In the determination result, the kind of a work machine and a classified work name are included. This determination result is recorded also in a detected object list. The details of the work analyzing processing with regard to this determination of a work will be mentioned later.

### (Output creating unit 224)

The output creating unit 224 creates work analysis information by analyzing and processing the data of the determination result of the determination unit 223. The work analysis information includes the analysis result of the determination result and the display data in which this analysis result is visualized. The display data created by analysis includes a Gantt chart, a work ratio (pie graph) for each object (work machine, worker), and a flow line or heat map in a work area for each object. In this connection, this work analysis information may be automatically created about items set beforehand and may be output to a predetermined output destination, or it may be created and output at each time in response to a request from a user through a PC terminal 30.

### (Work analyzing processing)

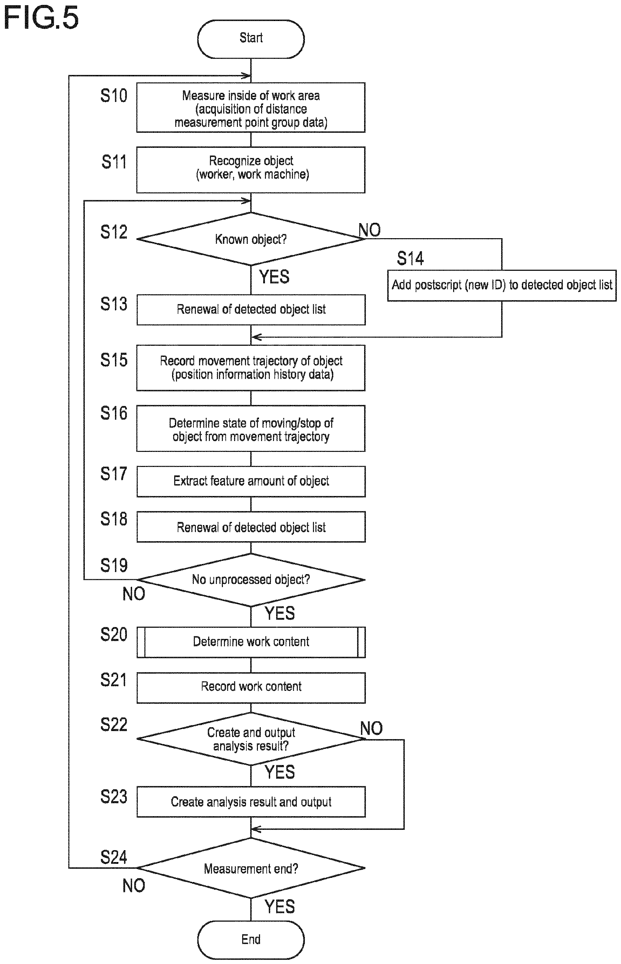

Next, with reference to FIG. 5 to FIG. 19, the work analyzing processing performed by the work analyzing system and the work analyzing apparatus will be described. FIG. 5 is a main flowchart showing a work analyzing processing.

### (Step S10)

First, the acquisition unit 221 of the work analyzing system 1 controls the LiDAR 11 of the measurement unit 10, measures the inside of the work area 90, and acquires distance measurement point group data.

### (Step S11)

The object recognizing unit 222 recognizes an object in the work area 90 from the distance measurement point group data obtained in Step S10. Moreover, it may be permissible to configure such that the object recognizing unit 222 recognizes the kind information of the object recognized here. For example, the object recognizing unit 222 recognizes whether the object is a person or a work machine. Then, in the case where the object is the work machine, the object recognizing unit 222 recognizes whether the work machine is which kind (a wheel loader, an arti-damp, etc.) of the work machines 80.

### (Step S12)

In the case where the object recognized in Step S11 is a known object recorded in the detected object list (YES), the control unit 22 advance the processing to Step S13. On the other hand, in the case where the object is a newly recognized object (NO), the control unit 22 advance the processing to Step S14.

### (Step S13)

The control unit 22 renews the detected object list and adds position information or this position information and feature amount in the information on the existing object ID, thereby updating the information.

### (Step S14)

The control unit 22 newly provides arbitrary consecutive numbers (object ID) used for tracing, to the newly recognized object and records them in the detected object list.

### (Step S15)

The control unit 22 records the movement trajectory of the recognized object. This record is stored as position information history data in the memory unit 21.

### (Step S16)

The object recognizing unit 222 determines the moving or stop of the object from the movement trajectory. In concrete terms, a speed is calculated from the moving amount of the position over multiple frame (equivalent to from one second to several seconds), and, in the case where the speed is a predetermined speed or more, the object is determined as being in the state of moving, and in the case where the speed is less than the predetermined speed, the object is as being in the state of stop. The predetermined speed used for the determination is, for example, 1 km/hour.

### (Step S17)

The object recognizing unit 222 recognizes a feature amount of an object. As a feature amount, as mentioned above, in the case where a work machine includes an operating portion, in order to make it possible to determine a condition of the operating portion, the object recognizing unit 222 recognizes the outline shape or entire object size of the work machine 80 as a feature amount. Moreover, as this feature amount, information on whether or not the arm is in a state of having been being raised upward, may be used.

### (Step S18)

The control unit 22 records the determination result of moving/stop and the feature amount recognized in Steps S16 and S17, in the detected object list and renews the data.

### (Step S19)

In the case where there is no unprocessed object (YES), the control unit 22 will advance the processing to Step S20. In the case where there is an unprocessed object (NO), the control unit 22 will return the processing to Step S12 and performs processing for the next object.

### (Step S20)

In this Step S20, the determination unit 223 determines (identifies) a work according to a subroutine flowchart in FIG. 7 mentioned later, i.e., determines the contents of the work.

### (Step S21)

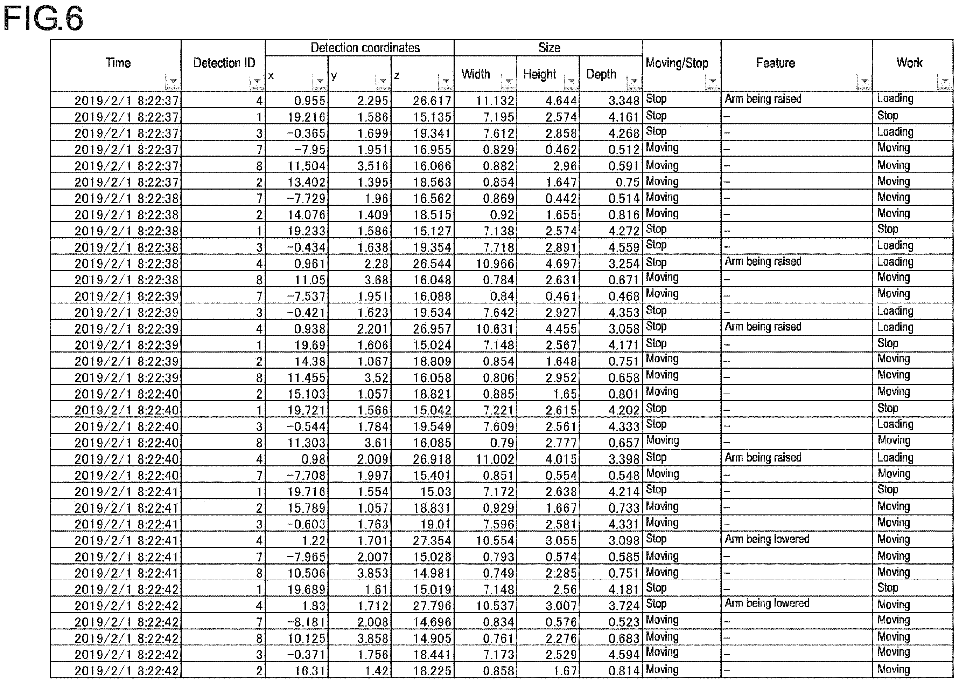

The control unit 22 records the determined work in a detection list and the like. FIG. 6 shows an example of the detected object list. As shown in the same diagram (FIG. 6), the detected object list includes a detection ID of an object recognized by the above-mentioned processing, detection coordinates at each time, size information, determination result of moving/stop, feature (feature amount), and determined work contents. This determined work content is one determined (identified) in Step S20. In this connection, although omitted in the same diagram (FIG.6), information on the kind of an object (a person, a work machine (and its kind), other objects) is included for each detection ID.

### (Step S22)

In the case where there is a request for creating and outputting an analysis result by an instruction from a user via the PC terminal 30 etc. (YES), the control unit 22 advances the processing to Step S23, and in the case where there is not such a request (NO), the control unit 22 advances the processing to Step S24.

### (Step S23)

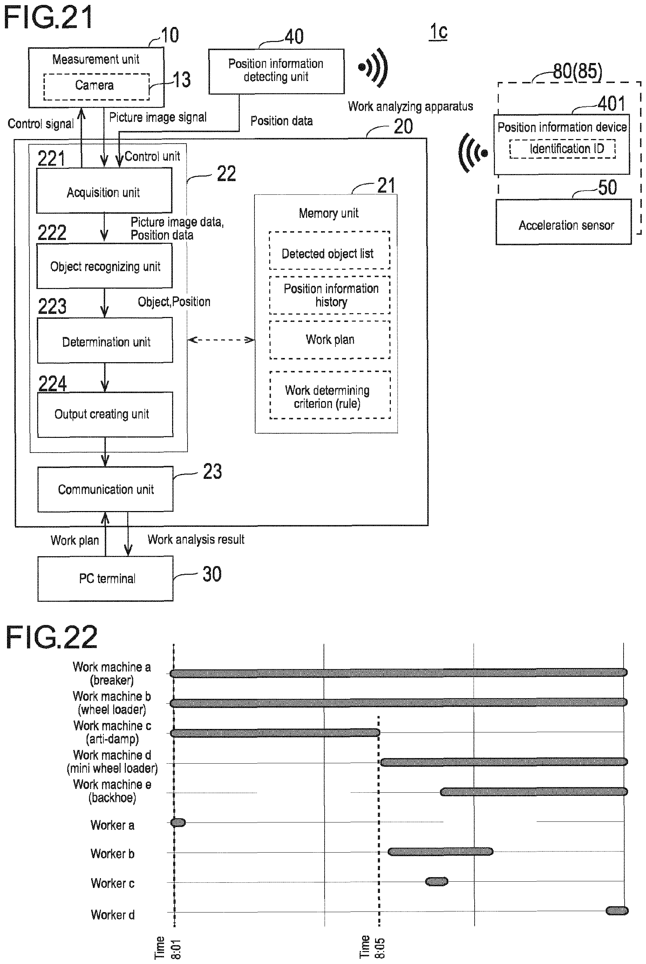

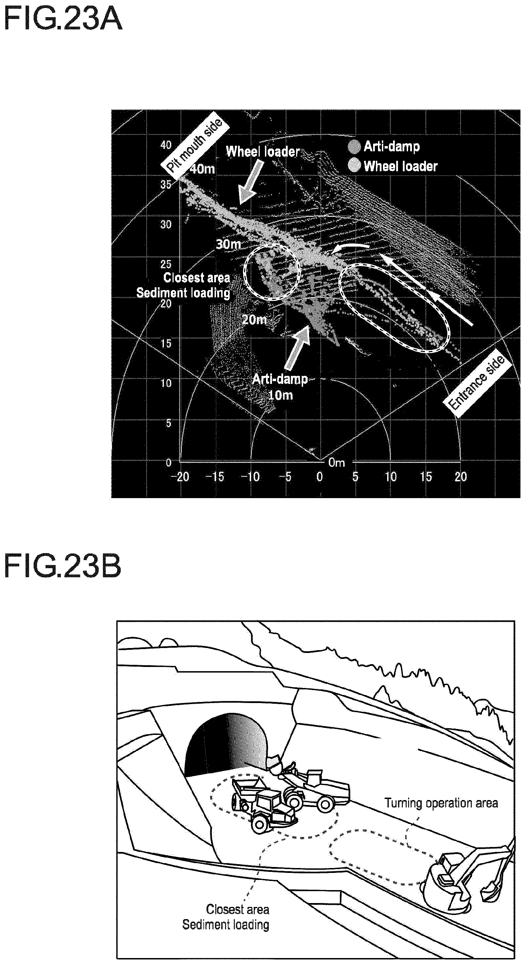

The output creating unit 224 analyzes and processes the data of the determination result obtained in Step S20, thereby creating work analysis information. Successively, the output creating unit 224 transmits the created work analysis information to the PC terminal 30 of a transmission destination having been set beforehand. An output example of this work analysis information will be mentioned later (later-mentioned FIG. 22, FIG. 23).

### (Step S24)

In the case where the measurement is not ended (NO), the processing is returned to Step S10, and the processing in Step S10 and the following processes are repeated. In the case where the measurement is ended, the processing is ended (End).

(Determination processing of work contents)

Next, with reference to a subroutine flowchart shown in FIG. 7, the determination (identification) processing of work contents to be performed in Step S20 in the above-mentioned FIG. 5 will be described.

### (Step S31)

The control unit 22 acquires work plan data. This work plan data has been acquired in advance through the PC terminal 30 and is memorized in the memory unit 21.

FIG. 8A and FIG. 8B show schematically work plan data acquired in Step S31. The work plan data shown in FIG. 8A is a work plan 1 and is constituted by items of work processes with regard to tunnel excavation performed in the work area 90 and the order, start time, and finish time of these work processes. The work plan data shown in FIG. 8B is a work plan 2 and is constituted by items of works performed in work processes and the order of these works. In this connection, FIG. 8B shows a work plan in the case where a work process is "sediment ejection".

### (Step S32)

The control unit performs process determination by using the work plan acquired in Step S31. FIG. 9 is a subroutine flowchart showing processing in this Step 32. The content of the processing in FIG. 9 is equivalent to a work determining criterion.

### (Step S401)

In the case where, in the data at a certain time in the detected object list, there is a work machine 80 of a spray machine (YES), the determination unit 223 advances the processing to Step S406. In the case where there is not the work machine 80 (NO), the determination unit 223 advances the processing to Step S402.

### (Step S402)

In the case where, in the detected object list at the same time, there is the work machine 80 of a wheel loader (YES), the determination unit 223 advances the processing to Step S405. In the case where there is not the work machine 80 (NO), the determination unit 223 advances the processing to Step S403.

### (Step S403)

In the case where, in the detected object list at the same time, there is the work machine 80 of an arti-damp (YES), the determination unit 223 advances the processing to Step S405. In the case where there is not the work machine 80, the determination unit 223 advances the processing to Step S404.

### (Steps S404 to S406)

The determination unit 223 determines respective processes in Steps S404 to S406 as "excavating", "sediment ejection", and "spraying", ends the processing in FIG. 9, returns the processing to FIG. 7, and performs the processing in Step S33 (Return).

### (Step S33)

In Step S33 in FIG. 7, the determination unit 223 selects and acquires a work determining criterion corresponding to the process determined in Step S32 from the memory unit 21. FIG. 10 shows an example of the work determining criterion used in the case of having been determined as "sediment ejection" (Step S405). In the work determining criterion, a process name, a work machine, work (work items) to classify, position information, speed, and a feature amount are included. Moreover, in the position information, two items of absolute and relative are included. The absolute position information (absolute coordinate) includes, as shown in FIG. 2, a waiting area, a loading area, a tunnel excavating area, and an area set by a user in advance. The relative position information includes a distance between multiple objects (work machines). As this distance, not the center coordinates between two objects but the closest distance between objects, i.e., an interval (gap) between objects may be used. In this connection, a remarks column is the description for making the understanding of an embodiment easy and is not included in the work determining criterion.

### (Step S34)

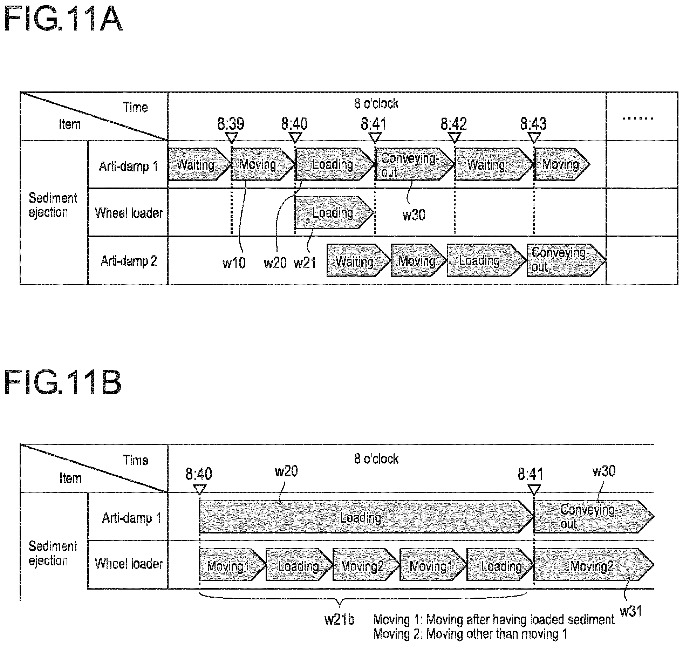

The determination unit 223 determines (also referred to identifies or classifies) the work contents performed in each work process by using the detected object list and the work determining criterion acquired in Step S33. This determination processing for a work will be mentioned later. FIG. 11A and FIG. 11B show an example of the work determination result. With regard to each work process (sediment ejection), as a work history, history data regarding a work (work items), a timing of each work, and the order of each work are recorded for each work machine. FIG. 11A is a diagram corresponding to FIG. 8B, and timings that have been actually performed correspondingly to the work plan are described. FIG. 11B is one that has recorded in more details. Relative to a work w21 in FIG. 11A, in a work w21b in FIG. 11B, the work of a wheel loader is recorded in more details. In particular, by grasping the stop information of a work machine, such as loading, waiting, and so on by using speed information, it is possible to grasp useless stop time that does not contribute to productivity. By utilizing such a work history, the improvement of a work can be aimed.

### (Step S35)

In the case where there is an unprocessed object (NO), the control unit 22 returns the processing to Step S33 and performs the processing for the next object. On the other hand, in the case where there is no unprocessed object (YES), the control unit 22 ends the subroutine processing and returns to the processing after Step S20 in FIG. 5 (Return).

### (Each process of work identification)

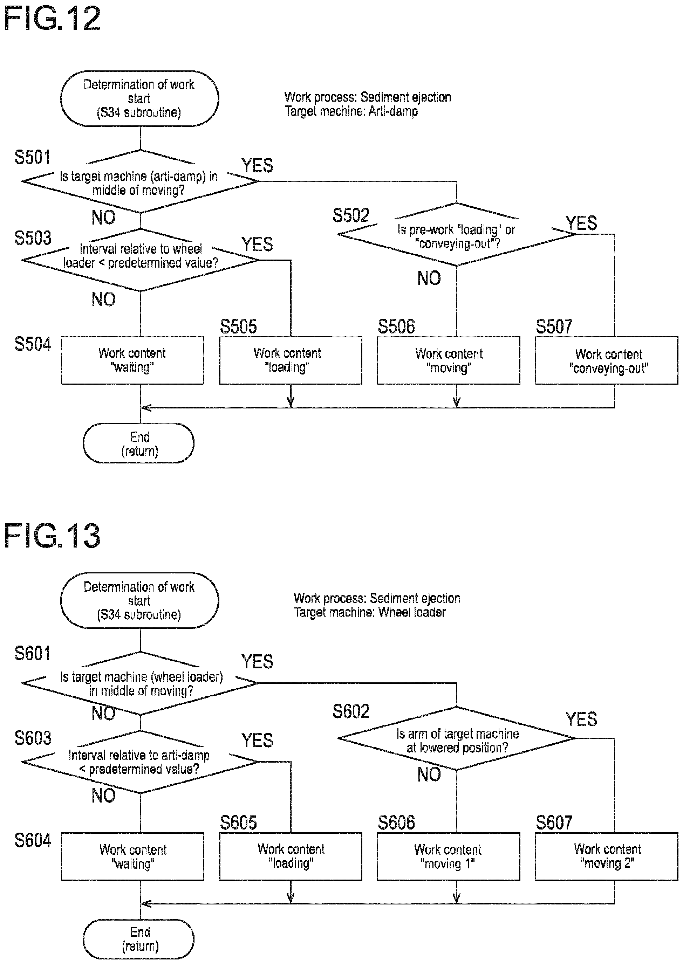

Next, with reference to FIG. 12 to FIG. 19, each process of work determination in Step S34 is described. Hereinafter, three kinds of examples of Step S34 from the first example to the third example are described. FIG. 12 is a subroutine chart of Step S34 that sets the arti-damp in the "sediment ejection" process to a target machine, and FIG. 13 is a subroutine chart of Step S34 that sets the wheel loader in the same process to a target machine. By these processes, the determination is performed for the works w10, w20, w30, w21, w21b, and w31 in FIG. 11A and FIG. 11B.

### (First example of Step S34)

### (Work process "sediment ejection", work machine "arti-damp")

### (Step S501)

In Step S501 in FIG. 12, the determination unit 223 determines, in the data at a certain time in the detected object list, whether or not the target work machine 80 (arti-damp) is in the middle of moving. In the case of in the middle of moving (YES), the processing is advanced to Step S502, and in the case of not in the middle of moving (NO), the processing is advanced to Step S503. Whether or not in the middle of moving is determined by comparing with a predetermined speed threshold, as similar to the above description.

### (Step S502)

In the case where the determination result for a prior work at a time a little earlier than this object is "loading" or "conveying-out" (YES), the processing is advanced to S507, and in the case where the determination result for a prior work is other than these (NO), the processing is advanced to S506.

### (Step S503)

The determination unit 223 refers to the detected object list and determines whether an interval (gap) with other work machine 80 (wheel loader) existing in the same work area 90 at the same time is less than a predetermined value. For example, as a threshold (predetermined value), it is 1 m. In the case where the interval is less than the predetermined value (YES), the processing is advanced to Step S505, and in the case where the interval is the predetermined value or more (NO), the processing is advanced to Step S504.

### (Steps S504 to S507)

The determination unit 223 determines respective works (work contents) in Steps S504 to S507 as "waiting" "loading", "moving", and "conveying-out", ends the processing in FIG. 12, and returns the processing to FIG. 7 (Return).

FIGS. 14A to 14C is drawing showing a situation of a work content "moving" in Step S506. This "moving" corresponds to the work w10 in FIG. 11A. FIG. 14A and FIG. 14B are drawings corresponding to FIG. 2 and FIG. 4, respectively. It is a display image of a top view created from the distance measurement point group data obtained by measuring the work area 90 of the state in FIG. 14A. FIG. 14C is a diagram showing speed data. A section (a section 1, a section 2) of moving in FIG. 14C corresponds to FIG. 14A and FIG. 14B. In the situation as shown in FIG. 14, the work content of an arti-damp is identified as "moving".

### (Second example of Step S34)

### (Work process "sediment ejection", a work machine "wheel loader")

### (Step S601)

In Step S601 in FIG. 13, the determination unit 223 determines, in the data at a certain time in the detected object list, whether or not a target machine, i.e., the target work machine 80 (wheel loader) is in the middle of moving. In the case of in the middle of moving (YES), the processing is advanced to Step S602, and in the case of not in the middle of moving (NO), the processing is advanced to Step S603. Whether or not in the middle of moving is determined by comparing with a predetermined speed threshold, as similar to the above description.

### (Step S602)

The determination unit 223 determines, by using a feature amount of an object of a target machine extracted in Step S17 in FIG. 5, whether or not the arm position has been being lowered. In the case where the arm position has been being lowered (YES), the processing is advanced to Step S607, and in the case where the arm position has not been being lowered (NO), the processing is advanced to Step S606.

### (Step S603)

The determination unit 223 refers to the detected object list and determines whether an interval (gap) with other work machine 80 (arti-damp) existing in the same work area 90 at the same time is less than a predetermined value. In the case where the interval is less than the predetermined value (YES), the processing is advanced to Step S605, and in the case where the interval is the predetermined value or more, the processing is advanced to Step S604.

### (Steps S604 to S607)

The determination unit 223 determines respective works (work contents) in Steps S604 to S607 as "waiting" "loading", "moving 1", and " moving 2", ends the processing in FIG. 13, and returns the processing to FIG. 7 (Return). Here, the moving 1 is the moving in a state where sediment (earth and sand) has been loaded into a bucket at a tip of an arm, and the moving 2 is the moving other than the moving 1 (for example, empty).

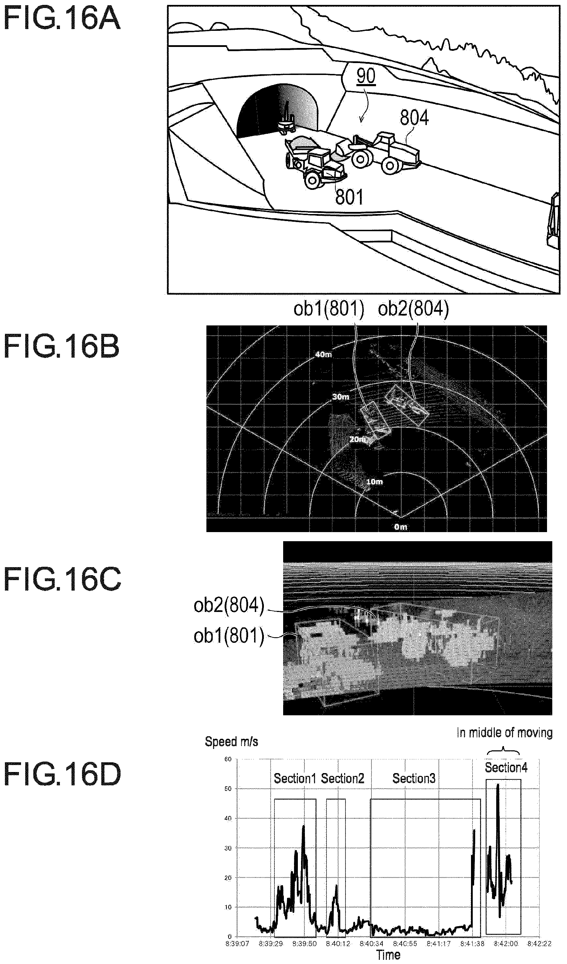

FIGS. 15A to 15D is drawing showing a situation of a work content "loading" in Steps S505 and S605. This "loading" corresponds to the works w20 and w21b in FIG. 11B. FIGS. 15A, 15B, and 15D correspond to FIGS. 14A, 14B, and 14C, respectively. In this connection, FIG. 15D shows the speed data of an arti-damp, and the drawing of the speed data of a wheel loader is omitted (FIG. 16 is also the same). FIG. 14C is a display image of a top view that is created from the same distance measurement point group data as that of FIG. 14B and is viewed from a position of the LiDAR 110. The interval between the arti-damp (work machine 801) and the wheel loader (work machine 804) is less than a predetermined distance, and both the work machines 80 have stopped. Accordingly, the work is determined as "loading".

FIG. 16 is drawing showing the situation of the work contents "conveying-out" and "moving 2 in Steps S507 and S607. FIGS. 16A to 16D correspond to FIGS. 15A to 15D, respectively. The pre-work of the arti-damp (work machine 801) is "loading" and the current work is in the middle of moving. Accordingly, the work can be determined as "conveying-out". Moreover, the wheel loader (work machine 804) is in the middle of moving and has the feature amount ("the arm being at the lower position"). Accordingly, the work of the wheel loader is determined as "moving 2".

### (Third example of Step S34)

### (Work process "spraying", target object "worker")

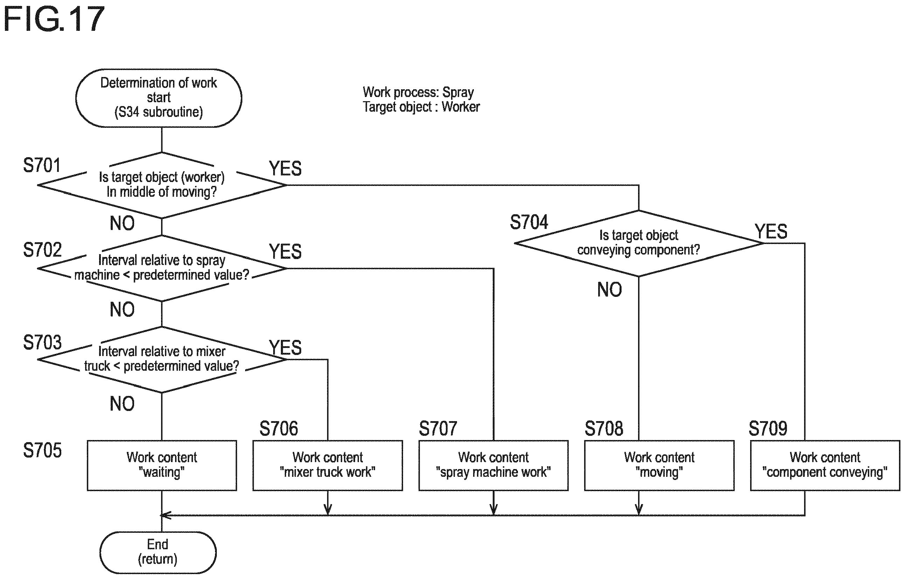

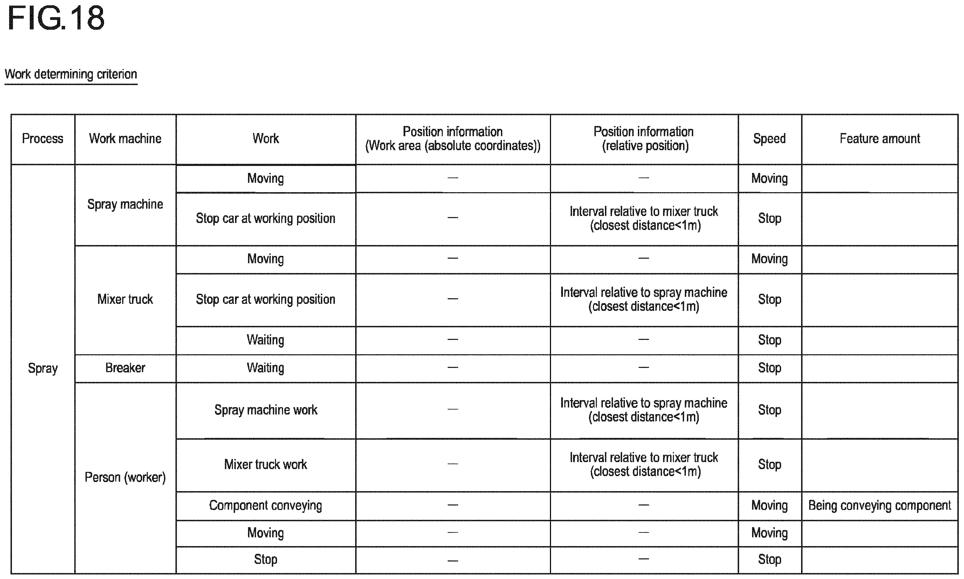

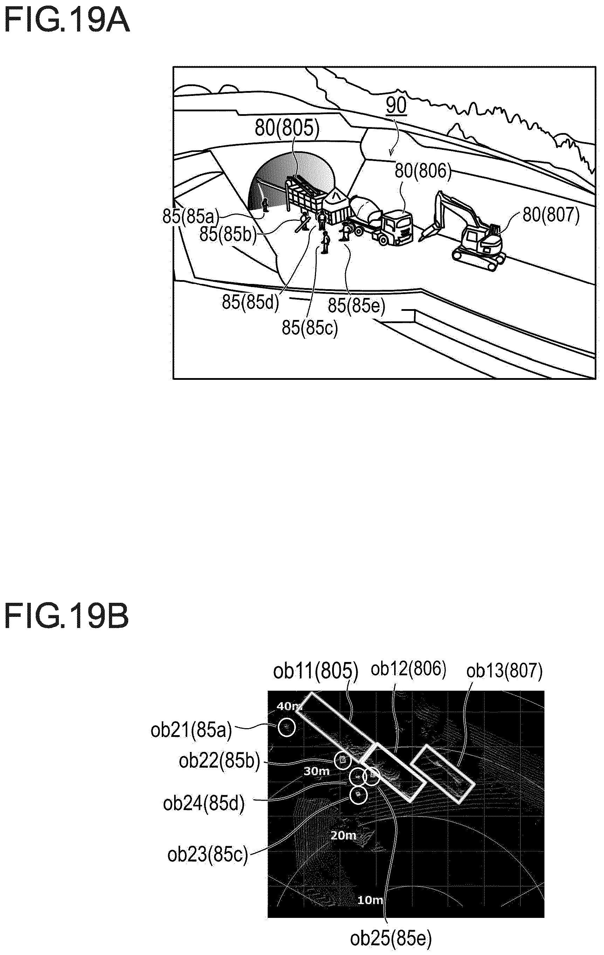

Next, with reference to from FIG. 17 to FIG. 19B, each process of the work identification in Step S34 in a "spraying" process is described. FIG. 17 is a subroutine chart of Step S34 in which the worker 85 in a "spraying" process is set to a target. FIG. 18 shows a work determining criterion used in a "spraying" process. FIGS. 19A and 19B is a schematic drawing showing one example of a work area 90 in a spraying process. In FIGS. 19A and 19B, in the work area 90, there exist a spray machine (work machine 805), a mixer truck (work machine 806), and a breaker (work machine 807) as the work machine 80, and multiple workers 85 (85a to 85e).

### (Step S701)

Here, the determination unit 223 determines, in the data at a certain time in the detected object list, whether or not the worker 85 being a target object is in the middle of moving. In the case of in the middle of moving (YES), the processing is advanced to Step S704, and in the case of not in the middle of moving (NO), the processing is advanced to Step S702. Whether or not in the middle of moving is determined on a basis of whether or not being a predetermined speed or more, or being less than the predetermined speed, as similar to the above description. As a threshold in here, although 1 km/hour same as the work machine may be applied, a threshold different from the work machine may be applied.

### (Step S702)

The determination unit 223 determines whether or not an interval between the spray machine 805 and the worker 85 is less than a predetermined value. For example, as a threshold, although 1 m same as the work machine may be applied, a threshold different from the work machine may be applied. In the case where the interval is less than a predetermined value (YES), the processing is advanced to Step S707, and in the case where the interval is a predetermined value or more (NO), the processing is advanced to Step S703.

### (Step S703)

The determination unit 223 determines whether or not an interval between the mixer truck 806 and the worker 85 is less than a predetermined value. In the case where the interval is less that the predetermined value (YES), the processing is advanced to Step S706, and in the case where the interval is the predetermined value or more (NO), the processing is advanced to Step S705.

### (Step S704)

The determination unit 223 determines, on the basis of the feature amount of the worker 85, whether or not the worker 85 is conveying a component. In the case where the worker 85 is conveying a component (YES), the processing is advanced to Step S709, and in the case where the worker 85 is not conveying a component (NO), the processing is advanced to Step S708. This conveyance includes conveyance by hand carry and a hand-pushed truck.

### (Steps S705 to S709)

The determination unit 223 determines respective works (work contents) in Steps S704 to S709 as "waiting" "mixer truck work", "spray machine work", "moving", and "component conveying", ends the processing in FIG. 17, and returns the processing to FIG. 7 (Return).

FIGS. 19A and 19B are drawings corresponding to FIG. 2 and FIG. 4, respectively. FIG. 19B shows a display image of a top view created from the distance measurement point group data obtained by measuring the work area 90 in the state of FIG. 19A. The work machines 805 to 807 and the workers 85a to 85e correspond to objects ob11 to ob13 and ob21 to ob25, respectively. In FIGS. 19A and 19B, the workers 85a and 85c are determined as being in "waiting", the worker 85b is determine as being in "mixer truck work", the worker 85d is determine as being in "spray machine work", and the worker 85e is determine as being in "component conveying".

In this way, a work analyzing system 1 according to the present embodiment includes an object recognizing unit 222 that recognizes an object including a work machine 80 or a person (worker 85) from measurement data obtained by measuring a work area 90 by a measurement unit 10 and determines position information on the recognized object and a feature amount with regard to a shape of the object, and a determination unit 223 that determines a work performed in a work area 90 from a position of the object recognized by the object recognizing unit 222, a positional relationship relative to other objects, and the feature amount. With this, it becomes possible to record a work history in the work area 90. Moreover, even in the work area 90, such as construction sites etc. where work machine and surrounding environments change day by day, or work area moves, by using the LiDAR 110 as the measurement unit 10, it is possible to record a work history stably. In particular, since works performed at each time can be recorded and managed for each work machine and each worker, it is possible to acquire an index for aiming to increase the efficiency of a work. Moreover, by grasping stop information on a work machine, such as loading, waiting, and the like by using speed information, it is possible to grasp useless stop time that does not contribute to productivity. By utilizing such a work history, it is possible to acquire an index for aiming to improve a work.

### (Second embodiment)

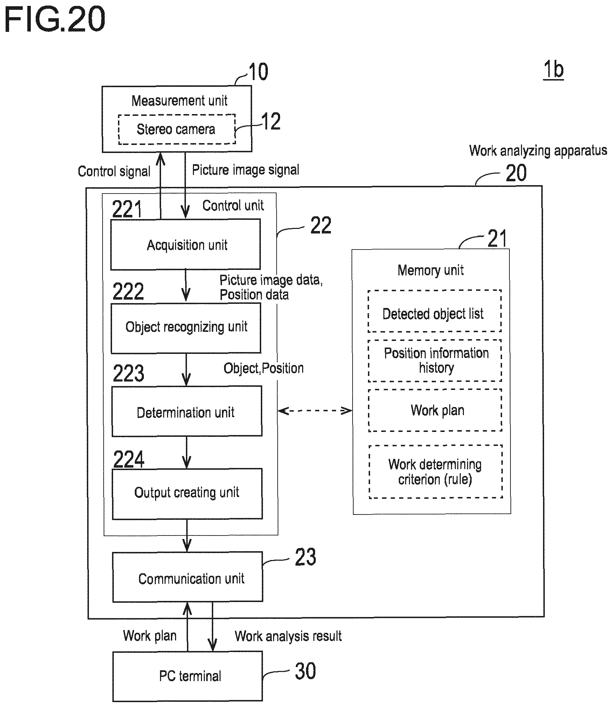

FIG. 20 is a block diagram showing a main configuration of a work analyzing system 1b according to the second embodiment. In the work analyzing system 1 according to the above-mentioned first embodiment, the measurement unit 10 has used the LiDAR 11. Moreover, the work analyzing apparatus 20 has performed the recognition of an object and the work analyzing processing by using the distance measurement point group data obtained from the LiDAR 11. In the second embodiment described below, in place of the LiDAR 11, a stereo camera 12 is used, and then, distance measurement point group data is created by performing image analysis for the measurement data (picture image data) of this stereo camera 12.

### (Stereo camera 12)

The stereo camera 12 photographs the work area 90 and acquires a picture image. The stereo camera 12 includes two cameras so as to be able to perform a stereo view. The two cameras are disposed such that their respective optical axes are directed to the same direction and arranged to be separated in parallel from each other by a predetermined distance (base length). The work analyzing apparatus 20 outputs a synchronizing signal to the camera 12 so as to photograph the work area 90 by matching the respective photographing timings of both cameras. The picture image data (picture image signals) obtained by both cameras are acquired by the acquisition unit 221. The recognizing unit 222 extracts feature points corresponding to the shape and outline of an object in a photographed image from each of both images by performing contrast adjustment and binarization processing to a pair of picture image data photographed at the same time by both cameras and calculates a distance up to each of the feature points on the basis of a positional relationship within images of the matched feature points and the data of a base length. With this, it is possible to obtain a distance value for each pixel in the picture image data. By such processing, the control unit 22 of the work analyzing apparatus 20 creates distance measurement point group data from photographed data (measurement data) in the work area 90. Moreover, the recognizing unit 222 recognizes a feature amount by performing image analysis for the obtained picture image. For example, the recognizing unit 222 recognizes, by the image analysis, whether the arm is in a state of being raised upward or a state of being lowered downward.

In the work analyzing system 1b according to such the second embodiment, the work analyzing processing shown in FIG. 5 etc. and similar to the first embodiment is performed. With this, the effect similar to that in the first embodiment can be attained.

### (Third embodiment)

FIG. 21 is a block diagram showing a main configuration of a work analyzing system 1c according to the third embodiment. In the third embodiment described below, in place of the LiDAR 11, a camera 13 is used, and then, a feature amount is recognized by performing image analysis for the measurement data (picture image data) of this camera 13. Moreover, each of the work machine 80 and the worker 85 that work in the work area 90 holds one or more position information devices 401, and position information on this position information device 401 can detected by the position information detecting unit 40 that performs wireless communication with this. Furthermore, to the work machine 80, an acceleration sensor 50 is attached.

### (Camera 13)

The camera 13 photographs the work area 90 and acquires a picture image. The camera 13 may be an ordinary camera (single eye camera) or may be a stereo camera similar to that in the second embodiment. The recognizing unit 222 recognizes a feature amount by analyzing a picture image having been obtained from the camera 13. The recognition of a feature amount may be performed by pattern-matching a pattern of the feature amount memorized in the memory unit 21 beforehand with the obtained picture image. Moreover, the recognition may be performed by using a learned model. The learned model can be machine-learned by supervised learning by using a large number of learning sample data provided with a correct answer label ("an arm has been being raised upward", "an arm has been being lowered downward", "be conveying a load", and the like) with regard to a picture image obtained by the camera 13 and a feature amount of an object existing in the picture image.

### (Position information detecting unit 40, position information device 401)

The recognizing unit 222 of the work analyzing system 1c acquires the position information detected by the position information detecting unit 40 through the acquisition unit 221. As this position information device 401 held by the work machine 80 and the worker 85, a portable device, such as an IC tag, a smart phone, or the like can be applied.

As this position information detecting unit 40 and the position information device 401, various well-known technologies can be applied. For example, technology, for example, BLE (Bluetooth (registered trademark) Low Energy), beacon (Beacon), a Wifi positioning device, a UWB (Ultra Wide Band) positioning device, an ultrasonic positioning device, GPS (Global Positioning System), and the like, can be applied.

In the case of having applied the technology of a BLE beacon, a plurality (for example, three sets) of position information detecting units 40 are arranged around the work area 90 so that most ranges of the work area 90 may become a detection area. Moreover, beacon signals including unique ID of the position information device 401 are transmitted at a predetermined interval from the position information device 401 as a transmitter. Moreover, the position information detecting unit 40 as a receiver estimates a distance from the intensity of the beacon signals transmitted from the position information device 401. Then, the position of the own device (position information device 401) is specified from the arrangement position information on the plurality of fixedly-arranged position information detecting units 40 and distance information up to each of the position information detecting units 40. The position information device 401 transmits the position information on the own device and the unique ID to the position information detecting unit 40.

Moreover, in the case of the Wifi positioning technology, the position information device 401 held by the work machine 80 and the like functions as a receiver, and the plurality of position information detecting units 40 being access points function as a transmitter. The position information device 401 receives beacon signals of electric wave of bands 2.4 GHz (or 5 GHz) transmitted from the position information detecting unit 40 and estimates a distance up to each access point on the basis of this signal strength, whereby it may be permissible to configure such that the position information device 401 itself detects position information.

With regard to converting (integrating) of a coordinate system (X'Y', or X'Y'Z') having been detected by the position information detecting unit 40 to a coordinate system (XYZ) of the work analyzing system 1c, by memorizing a local coordinate system held by a position information device in the memory unit 21 beforehand, and by performing converting with a predetermined conversion formula, converting or associating of a coordinate system is performed.

Moreover, for a specific work machine 80 constituted by a main body and an operating portion, the position information device 401 may be attached to the main body and each of one or more operating portions. By doing in this way, the work analyzing system 1c can recognize the feature amount of the work machine 80. For example, in the case where the work machine 80 is a wheel loader, by attaching the position information device 401 to each of a tip portion of an arm near a bucket and a main body, it is possible to determine whether arm has been being raised upward or has been being lowered downward.

### (Acceleration sensor 50)

The work machine 80 includes an acceleration sensor 50 and a wireless communication unit (not shown). Then, the analyzing system 1 acquires the output data of the acceleration sensor 50 from the work machine 80 through the communication unit 23. The object recognizing unit 222 can perform the determination of a moving state of the work machine 80, i.e., a state of moving or stop, on the basis of the output data of this acceleration sensor 50.

Also, in the work analyzing system 1c according to such the third embodiment, similarly to the first and second embodiments, the work analyzing processing shown in FIG. 5 and the like is performed, whereby the effect similar to that in the first embodiment can be attained. Moreover, by using the position information detecting unit 40, the identification of the work machine 80 can be more correctly individually performed by the acquired identification ID. Moreover, by using the acceleration sensor 50, determination whether the work machine 80 is in a state of moving or stop, can be performed with sufficient accuracy.

### (Output example of work analysis information)

It may be permissible to configure such that the output creating unit 224 creates work analysis information with regard to at least any one of a Gantt chart, a work ratio for each object, and a flow line or a heat map in a work area for each object, by using a determination result by the determination unit 223.

FIG. 22 shows an output example of a Gantt chart and shows the working time for each f work machines and workers. Moreover, FIGS. 23A and 23B shows an output example of a flow line, and FIG. 23A shows a history of a flow line for each work machine in a predetermined period. Moreover, FIG. 23B is a schematic illustration showing a work area corresponding to FIG. 23A. By making such an output, an administrator can become to grasp a work history and a work situation more easily.

In explaining the features of the above-mentioned embodiment, the configuration of the work analyzing system 1 described in the above is used to describe the main configuration. Accordingly, without being not limited to the above-mentioned configuration, within the scope of claims, various modification can be made. Moreover, the configuration equipped in the common work analyzing system 1 is not intended to be excluded.

### (Modification example)

For example, the configuration of any one or both of the position information device 401, and the position information detection unit 40, and the acceleration sensor 50 applied in the third embodiment may be applied to the first embodiment. Furthermore, the camera 12 in the second embodiment may be used in combination with the first embodiment. By doing in this way, since the recognition of an object and the recognition of a feature amount of an object can be performed more accurately, the determination of a work can be performed more accurately.

Devices and methods to perform various processing in the work analyzing system 1 according to the embodiments mentioned above can be realized by any one of a hardware circuit for exclusive use and a programmed computer. The above-described program, for example, may be provided by a computer-readable recording medium, such as a USB memory and DVD (Digital Versatile Disc)-ROM, or may be provided on-line through a network, such as Internet. In this case, the program recorded in a computer-readable recording medium is usually transmitted to and memorized in a memory unit, such as a hard disk. Moreover, the above-mentioned program may be provided as independent application software or may be incorporated in the software of an apparatus as one function of the apparatus.

The present application is based on the Japanese patent application (Patent Application No. 2019-098114) filed on May 24, 2019, and its disclosure contents are referenced and incorporated as a whole.

### Reference Signs List

- 1, 1b, 1c: Work analyzing system
- 10: Measurement unit
- 11: LiDAR
- 12: Stereo camera
- 13: Camera
- 20: Work analyzing apparatus
- 21: Memory unit
- 22: Control unit
- 221: Acquisition unit
- 222: Recognizing unit
- 223: Determination unit
- 224: Output creating unit
- 23: Communication unit
- 30: PC terminal
- 40: Position information detecting unit
- 401: Position information device
- 50: Acceleration sensor
- 90: Work area
- 80: Work machine
- 85: Worker

## Claims

1. A work analyzing system, comprising:
a measurement unit that measures an inside of a work area and acquires measurement data of time series;
an object recognizing unit that recognizes an object including a work machine or a person on a basis of the acquired measurement data and determines position information on the recognized object and a feature amount with regard to a shape of the object; and
a determination unit that determines a work having been performed in the work area on a basis of a position of the object recognized by the object recognizing unit, a positional relationship relative to other objects, and the feature amount.

2. The work analyzing system according to claim 1, wherein in a memory unit, a work plan that is performed in the work area and includes one or more the work, and a work determining criterion to determine whether or not the work has been executed, are memorized, and the determination unit performs determination of the work by using the work plan and the work determining criterion.

3. The work analyzing system according to claim 1, wherein in a memory unit, a work plan that is performed in the work area and includes one or more the work is memorized,
the determination unit performs determination of the work by using the work plan and a learned model with regard to a work determining criterion, and
the learned model is one having performed supervised learning in which an input of a position of the object recognized by the object recognizing unit, a positional relationship relative to other objects, and information on the feature amount and an output of a correct answer label of classification of the work, are used as a set.

4. The work analyzing system according to any one of claims 1 to 3, wherein the measurement unit includes a LiDAR and acquires, as the measurement data, distance measurement point group data obtained by measuring a distance in the work area by the LiDAR.

5. The work analyzing system according to claim 4, wherein the object recognizing unit recognizes the object by using the distance measurement point group data and determines position information on the recognized object.

6. The work analyzing system according to claim 4 or 5, wherein the object recognizing unit performs recognition of the feature amount by using the distance measurement point group data.

7. The work analyzing system according to any one of claims 1 to 4, wherein the measurement unit includes a camera and acquires, as the measurement data, picture image data obtained by photographing an inside of the work area.

8. The work analyzing system according to claim 7, wherein the object recognizing unit recognizes the object by performing image analysis for the picture image data and performs determination of position information on the recognized object.

9. The work analyzing system according to claim 7 or 8, wherein the object recognizing unit performs recognition of the feature amount by performing image analysis for the picture image data.

10. The work analyzing system according to any one of claims 1 to 4 and 7, further comprising:
an acquisition unit that acquires position information on a position information device held by the object,
wherein the object recognizing unit performs recognition of the object and determination of position information on the object on a basis of position information acquired from the position information device.

11. The work analyzing system according to claim 10, wherein the work machine includes a main body and one or more operating portions in which each of the operating portions is attached to the main body and a relative position of each of the operating portions relative to the main body changes,
on a basis of position information acquired by the acquisition unit from the position information device attached to each of the main body and the operating portions,
the object recognizing unit recognizes the feature amount of the work machine, and
the determination unit performs determination of the work by using the recognized feature amount.

12. The work analyzing system according to any one of claims 1 to 11, wherein the determination unit determines the work by using a moving speed of the object detected on a basis of a change of time series of a position of the object.

13. The work analyzing system according to claim 12, wherein the determination unit determines the work by using a state of moving and stop of the object determined on a basis of the moving speed of the object.

14. The work analyzing system according to claim 12, further comprising:
an acquisition unit that acquires output data from an acceleration sensor attached to the work machine,
wherein the determination unit determines the work by using a state of moving and stop of the work machine determined on a basis of output data from the acceleration sensor.

15. The work analyzing system according to any one of claims 1 to 14, further comprising:
an output creating unit that, by using a determination result by the determination unit, creates work analysis information with regard to at least any one of a Gantt chart, a work ratio of each object, and a flow line or a heat map in an inside of the work area of each object.

16. A work analyzing apparatus, comprising:
an acquisition unit that acquires measurement data of time series from a measurement unit that measures an inside of a work area;
an object recognizing unit that recognizes an object including a work machine or a person on a basis of the acquired measurement data and determines position information on the recognized object and a feature amount with regard to a shape of the object; and
a determination unit that determines a work having been performed in the work area on a basis of a position of the object recognized by the object recognizing unit, a positional relationship relative to other objects, and the feature amount.

17. A work analyzing program that is executed in a computer to control a work analyzing system including a measurement unit to measure an inside of a work area, the work analyzing program that makes the computer execute processing, comprising:
a step (a) of measuring an inside of a work area by the measurement unit and acquiring measurement data of time series;
a step (b) of recognizing an object including a work machine or a person on a basis of the acquired measurement data and determining position information on the recognized object and a feature amount with regard to a shape of the object; and
a step (c) of determining a work having been performed in the work area on a basis of a position of the object recognized in the step (b), a positional relationship relative to other objects, and the feature amount.

18. The work analyzing program according to claim 17, wherein the processing further comprises:
a step (d) of acquiring a work plan including one or more the work performed in the work area and a work determining criterion to determine whether or not the work has been executed, and
in the step (c), determination of the work is performed by using the work plan and the work determining criterion.
